# EUROPEAN PATENT APPLICATION

(11) **EP 2 385 701 A2**
(43) Date of publication of application: **09.11.2011**
(21) Application number: 11164636.0
(22) Date of filing: 03.05.2011
(51) Int. Cl.: H04N 7/15

(54) **Virtual conversation method**

(30) Priority: 04.05.2010 TW 099114166; 12.11.2010 TW 099139078
(71) Applicant: UTW Technologies Corporation, Taipei (TW)
(72) Inventor: Li, Yu-Hsien, Taipei (TW)
(74) Representative: von Kreisler Selting Werner

(57) **Abstract**

A virtual conversation method for use with an electronic device is provided. The method includes displaying a virtual environment view, wherein the virtual environment view includes a plurality of images. The plurality of images includes at least a participant image, wherein the plurality of images is disposed in the virtual environment view in a customary manner. The spatial arrangements of the plurality of images in the virtual environment view are associated with each other, wherein the participant image is generated according to a participant data that corresponds to a participant. A conversation voice signal generated according to a participant voice signal sent by the participant is broadcasted.

## Description

### BACKGROUND OF THE INVENTION

### 1. Field of the Invention

The present invention generally relates to a virtual conversation method. Particularly, the present invention relates to a virtual conversation method provided for use with an electronic device to allow users to commence conversation intuitively.

### 2. Description of the Prior Art

Along with the rapid advancement of electronic technologies, various handheld electronic products have greatly enriched the consumer market, satisfying consumers' work and entertainment related demands. For instance, mobile phones, mobile internet devices (MID), personal digital assistants (PDA), electronic books, digital photo frames, digital music players, electronic dictionaries, Global Positioning System Navigators (GPS Navigators) are all examples of handheld electronic products that help satisfy consumers' work and entertainment related demands.

Long distance conferencing systems may be utilized to provide communication capabilities for multiple participants located in different places. By applying handheld electronic devices towards long distance conferencing systems, the space and cost requirements for the installation of long distance conferencing systems may effectively be decreased. However, during operation, this type of video conferencing system is difficult to use (for instance, difficulties in seeing conferencing participants and/or other media contents), and therefore increases the complexities of video conferencing.

### SUMMARY OF THE INVENTION

It is an object of the present invention to provide a virtual conversation method for use with an electronic device to allow users to commence conversations intuitively with relatively more ease through the electronic device.

It is another object of the present invention to provide a virtual conversation method for use with an electronic device to allow users to commence conversations that are more intimate and lifelike through the electronic device.

The present invention of the virtual conversation method includes displaying a virtual environment view and broadcasting a conversation voice signal. The virtual environment view includes a plurality of images. The plurality of images at least includes a participant image, wherein the plurality of images is disposed in the virtual environment view in a customary manner. The spatial arrangements of the plurality of images in the virtual environment view are associated with each other, wherein the participant image is generated according to a participant data. The participant data corresponds to a participant. The conversation voice signal is generated according to a participant voice signal sent by the participant.

The plurality of images further includes a background image. The participant image is disposed within the background image in the customary manner. The spatial arrangement of the background image shown in the virtual environment view is associated with the participant image. The virtual environment view is a virtual view of real environment. The customary manner refers to real life intuitive experiences of participants corresponding to the participant image in usual locations in a real life environment.

In a preferred embodiment, the step of broadcasting the conversation voice signal includes enabling the electronic device to receive through a server the conversation voice signal sent from another electronic device of the participant and then broadcasting the conversation voice signal. In different embodiments, the step of broadcasting the conversation voice signal includes enabling the electronic device to directly receive the conversation voice signal sent from another electronic device of the participant and then broadcasting the conversation voice signal.

The step of displaying the virtual environment view includes displaying the virtual environment view in the electronic device. The step of broadcasting the conversation voice signal includes broadcasting the conversation voice signal from the electronic device. The participant data includes a name of the user of the electronic device, a personal identification number, or an identification data of the electronic device. The participant data includes gender, physical height, skin tone, or hair style of the user of the electronic device. The participant data includes a photo or image of the user of the electronic device. The step of displaying the virtual environment view further includes displaying the participant image in an animated manner in accordance with the conversation voice signal.

The virtual environment view includes a three-dimensional continuous view. The virtual conversation method further includes displaying different perspective views of the virtual environment view after the step of displaying the virtual environment view.

The virtual conversation method further includes activating a private conversation module, designating a private conversation recipient, and transmitting a private conversation signal to the private conversation recipient. The private conversation recipient is another participant. The step of designating the private conversation recipient includes selecting a private conversation recipient image corresponding to the private conversation recipient. The private conversation signal includes voice signals or text messages.

### BRIEF DESCRIPTION OF THE DRAWINGS

FIG. 1 is a flowchart of an embodiment of the present invention;

FIG. 2 is a schematic view of an embodiment of the present invention;

FIGS. 3A and 3B are schematic views of different embodiments;

FIG. 4A is a flowchart of an embodiment of the present invention;

FIG. 4B is a schematic view of another embodiment; and

FIG. 5 is a flowchart of another embodiment.

### DETAILED DESCRIPTION OF THE PREFERRED EMBODIMENT

The present invention provides a virtual conversation method for use with an electronic device to allow users to commence conversation intuitively. The electronic device is preferably a portable electronic device such as mobile phone, mobile internet device (MID), personal digital assistant (PDA), electronic book, digital frame, digital music player, electronic dictionary, global positioning system navigator (GPS navigator), laptop computer, or other related handheld electronic devices. However, in different embodiments, the electronic device is not limited to portable devices. The electronic device may also include desktop computers, flat panel computers, multimedia televisions, and other electronic devices with larger dimensions or heavier weight.

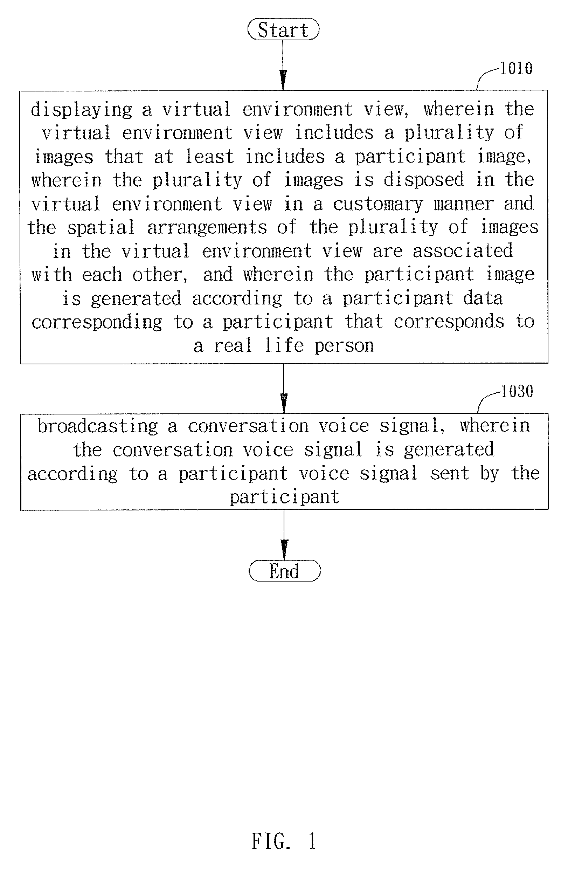

As shown in FIG. 1, the virtual conversation method of the present invention includes the following steps.

Step 1010 includes displaying a virtual environment view. The virtual environment view includes a plurality of images. The plurality of images at least includes a participant image, wherein the plurality of images is disposed in the virtual environment view in a customary manner. The spatial arrangements of the plurality of images in the virtual environment view are associated with each other, wherein the participant image is generated according to a participant data. The participant data corresponds to a participant, wherein the participant may be a real life person or a machine or program with artificial intelligence.

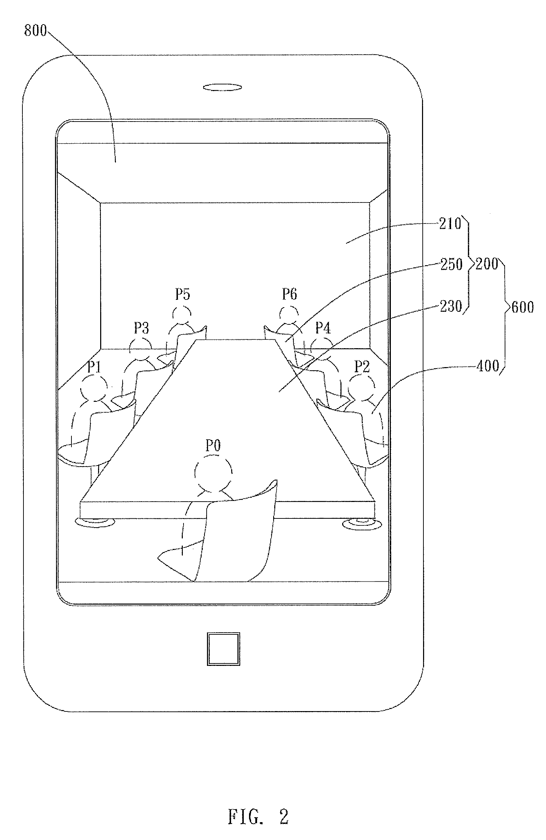

More specifically, the virtual environment view is a virtual view of real environment. As shown in a preferred embodiment in FIG. 2, the virtual environment view 800 is a virtual view of a conference room typically having a long table for commencing conversations. The virtual environment view 800 includes a background image 200 and a participant image 400. The background image 200 includes a wall 210, a long table 230, and chairs 250. In other words, in the preferred embodiment, the plurality of images 600 further includes the background image 200. The participant image 400 is disposed within the background image 200 in the customary manner. The spatial arrangement of the background image 200 within the virtual environment view 800 is associated with the participant image 400, wherein the background image 200 may be the background of the virtual environment view 800.

The customary manner refers to real life intuitive experiences of participants corresponding to the participant image in usual locations in a real life environment. As mentioned above, the spatial arrangement of the background image 200 shown in the virtual environment view 800 has an association with the participant image 400. This association preferably matches the intuitive life experiences of a typical person. For instance, participants in conference rooms in real life (i.e. conferencing participants) typically are seated beside the conference table. As seen in the virtual environment view 800 shown in FIG. 2, the participant images 400 are all arranged beside the long table 230. This display arrangement enables users, while commencing conversations through the electronic device, to have more intimate and lifelike conversations.

The participant data is the personal information of electronic device users joining a conversation. More specifically, in a preferred embodiment, the participant data may include the designation of the electronic device user such as first name, surname, personal identification number (PIN), or the identification data of the electronic device. However, in different embodiments, the participant data may include the outer profile characteristics of the electronic device user. Examples of outer profile characteristics may include but is not limited to the gender, physical height, skin tone, and hair style of the electronic device user. The participant data may also include an image or photo of the electronic device user, wherein the image or photo of the electronic device user includes a diagram matching the user's outer profile, such as a personal photo, portrait, or any diagram non-related to the user's outer profile.

In the preferred embodiment, the virtual environment view is displayed on the electronic device through a monitor of the electronic device. However, in different embodiments, the virtual environment view may be displayed apart from the electronic device through display devices connected to the electronic device (such as built-in or external projection devices, monitors, or other related display devices).

Step 1030 includes broadcasting a conversation voice signal, wherein the conversation voice signal is generated according to a participant voice signal sent by the participant.

In the preferred embodiment, the step of broadcasting the conversation voice signal includes enabling the electronic device to receive through a server the conversation voice signal sent from another electronic device of the participant and then broadcasting the conversation voice signal. More specifically, the server receives voice signals from all of the electronic device users attending the conversation and synchronously combines all received voice signals in real-time (instantaneously) to generate the conversation voice signal. In other words, due to the fact that the transfer and processing speeds of the participant voice signals are considerably prompt, the voice signals of every electronic device user participating in the conversation can be substantially broadcasted simultaneously as the voice signal is sent on the electronic devices of the other electronic device users participating in the conversation. In this manner, the electronic device user may commence conversations. In the preferred embodiment, the conversation voice signal is broadcasted by the electronic device through the speakers of the electronic device. However, in different embodiments, the conversation voice signal may be further outputted to another speaker device for broadcasting after being received by the electronic device. The electronic device may establish connections with the server through mobile phone communications, wireless internet communications, internet communications, Bluetooth communications, or any other communication methods.

In a different embodiment, the step of broadcasting the conversation voice signal includes enabling the electronic device to directly receive the conversation voice signal sent from another electronic device of the participant and then broadcasting the conversation voice signal. In other words, the voice signals of every electronic device user participating in the conversation may be synchronously combined on one of the participating electronic device to generate the conversation voice signal in order to send to every other participating electronic device. On the other hand, every electronic device participating in the conversation may also simultaneously receive voice signals from every other participating electronic devices and synchronously combine the received voice signals to generate the conversation voice signal.

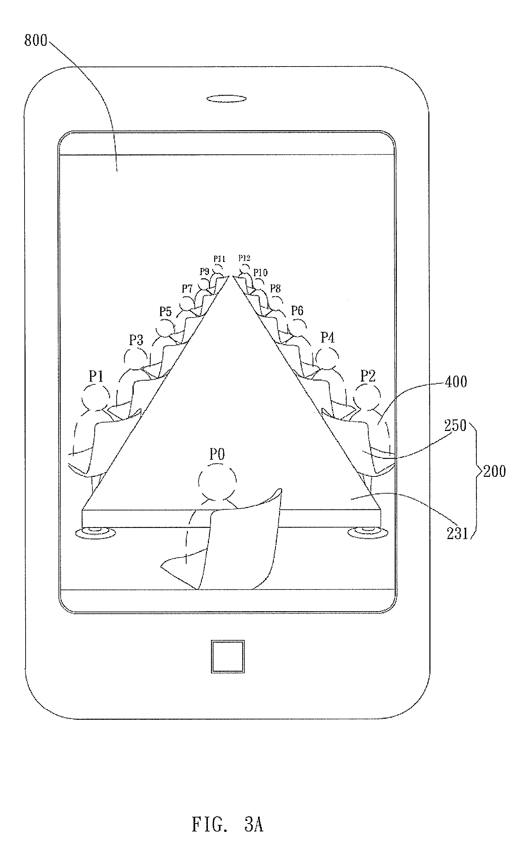

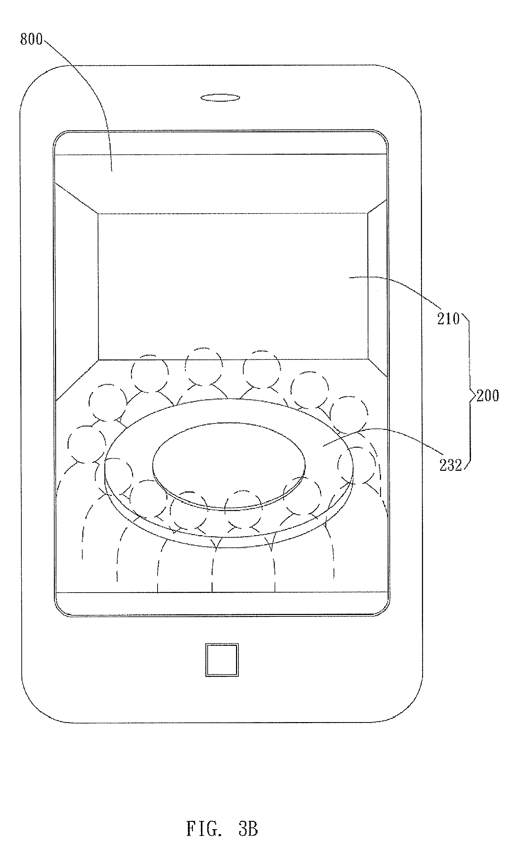

As shown in FIGs. 3A and 3B, in different embodiments, the background image may change according to requirements or may be selected by users of the electronic device. For instance, in the embodiment shown in FIG. 3A, the background image 200 includes a long table 231 extending towards the back such that when the number of participating electronic device users of the conversation increases, a corresponding number of participant images 400 may be conveniently added. In the embodiment shown in FIG. 3B, the background image 200 is a virtual view of a restaurant with a circular table 232 disposed therein. More specifically speaking, in regards to the background image 200, the background image 200 not only can change the furnishings of the conference room, but can also directly use other indoor (such as drawing room) or outdoor (such as arbors or porches) backgrounds as the background image 200. In other words, the method of the present invention is not limited to conference rooms and thereof related furnishings for commencing conversations, and is therefore further equipped for carrying out virtual online conversations.

On the other hand, the participant image 400 is generated according to the participant data. In other words, the participant image 400 within the virtual environment view may further display the participant data. As shown in the preferred embodiment in FIG. 2, when the participant data is the names of the electronic device users (P0 - P6), the names P0, P1, P2, P3, P4, P5, and P6 will be independently displayed on top of their respective participant images 400 corresponding to the participant data. If the participant data is the outer profile characteristics of the electronic device users (such as gender, physical height, skin tone, or hair style), the electronic device may further execute a graphical software program to enable each participant image 400 to match the outer profile characteristics mentioned above that correspond to their respective participant data. The graphical software program may be built-in to the electronic device or may also be downloaded from the server when the need to execute the graphical software program arises. Otherwise, if the participant data is the outer profile diagram of the electronic device user, such as a personal photo, then every participant image 400 will display their respective personal photos. In this manner, the participating electronic device users of the conversation may more conveniently identify each other.

In a different embodiment, the step of displaying the virtual environment view further includes displaying the participant image in an animated manner in accordance with the conversation voice signal. For instance, as shown in the preferred embodiment in FIG. 2, when the user corresponding to the participant image P0 speaks, P0 may change colors, flash/blink, change in only a portion of the image (for example, mouth opening/dosing), change in the whole image (for example, standing up from a seated position), or any other related methods of display. In this manner, the identity of the speaker may be more conveniently known to all participating electronic device users of the conversation.

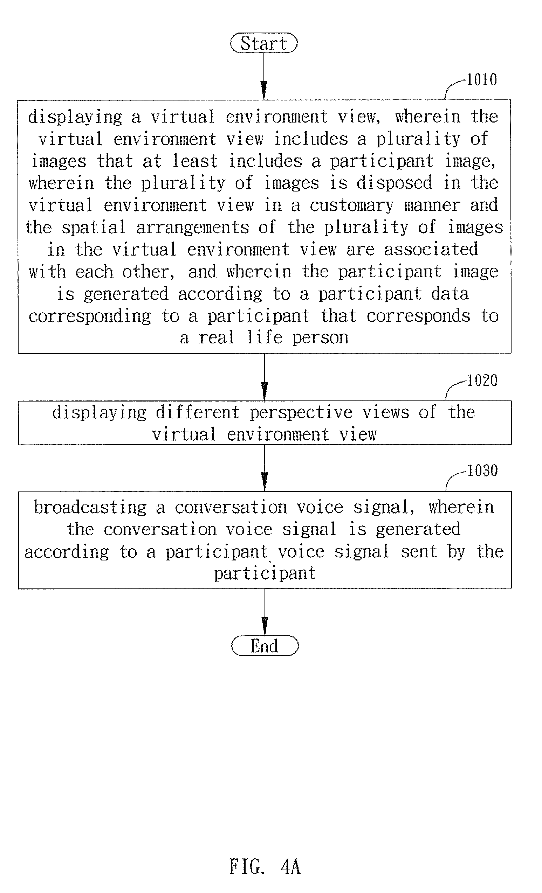

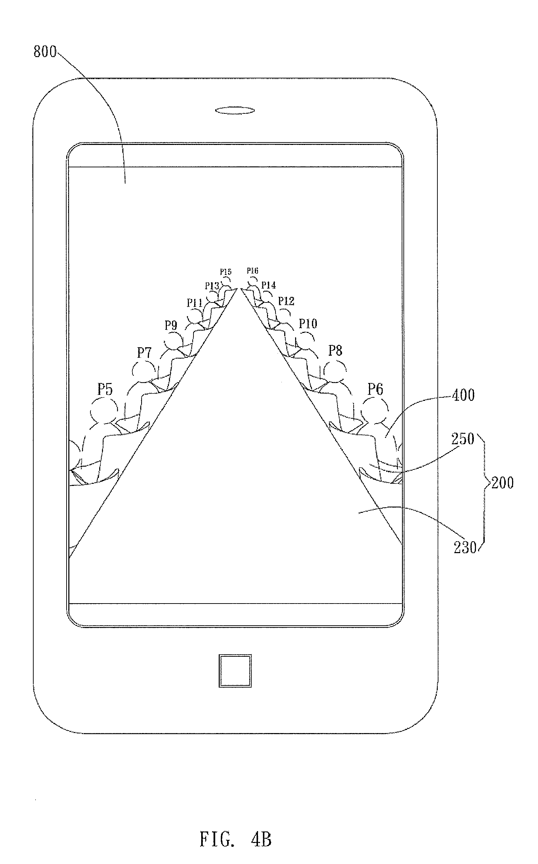

In a different embodiment, the virtual environment view includes a three-dimensional continuous view. As shown in FIG. 4A, the virtual conversation method includes step 1020 of displaying different perspective views of the virtual environment view. In the preferred embodiment, the virtual environment view is displayed on a monitor of the electronic device. However, in different embodiments, the virtual environment view may be displayed apart from the electronic device through display devices connected to the electronic device (such as built-in or external projection devices, monitors, or other related display devices). More specifically, as shown in the embodiment in FIG. 3A, the background image 200 includes the long table 231 extending towards the back such that when the number of participating electronic device users of the conversation increases, a corresponding number of participant images 400 may be conveniently added. In other words, in this instance, the virtual environment view is a three-dimensional continuous view extending towards the back. Users of the electronic device preferably may use touch and drag gestures on the monitor to enable the electronic device, as shown in the virtual environment view in FIG. 4B, to display the portion of the background image 200 that has been extended towards the back. In this manner, the long table 231 that has been extended towards the back as well as previously not shown participant images 400 of P13, P14, P15, and P16 may be displayed.

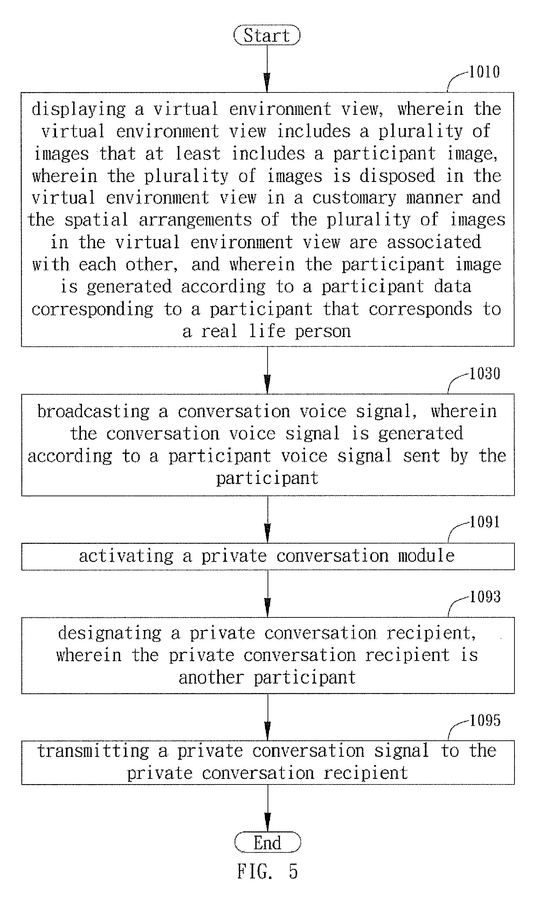

As shown in FIG. 5, the virtual conversation method further includes step 1091 of activating a private conversation module, step 1093 of designating a private conversation recipient, and step 1095 of transmitting a private conversation signal to the private conversation recipient. The private conversation recipient is another participant. In the preferred embodiment, step 1093 includes selecting a private conversation recipient image corresponding to the private conversation recipient, and step 1095 of transmitting the private conversation signal to the private conversation recipient includes voice signals or text messages. For instance, P1, one of the participating electronic device users, may select through touching on his/her electronic device the participant image corresponding to electronic device user P2. This selecting action activates the private conversation module while simultaneously designates the electronic device user P2 as the private conversation recipient. The electronic device user P1 may then input text messages on the electronic device to be transmitted directly or through the server to the electronic device of electronic device user P2. The text messages are then displayed on the electronic device of P2. In the preferred embodiment, text messages are the private conversation signal. However, in different embodiments, the private conversation signal may also be voice signals.

Although the preferred embodiments of the present invention have been described herein, the above description is merely illustrative. Further modification of the invention herein disclosed will occur to those skilled in the respective arts and all such modifications are deemed to be within the scope of the invention as defined by the appended claims.

## Claims

1. A virtual conversation method for use in an electronic device, comprising:
displaying a virtual environment view comprising a plurality of images, the plurality of images at least comprising a participant image, wherein the plurality of images is disposed in the virtual environment view in a customary manner, the spatial arrangements of the plurality of images in the virtual environment view are associated with each other, wherein the participant image is generated according to a participant data, the participant data corresponds to a participant; and
broadcasting a conversation voice signal, wherein the conversation voice signal is generated according to a participant voice signal sent by the participant.

2. The virtual conversation method of claim 1, wherein the plurality of images further comprises a background image, the participant image is disposed within the background image in the customary manner, the spatial arrangement of the background image shown in the virtual environment view is associated with the participant image.

3. The virtual conversation method of claim 1, wherein the virtual environment view is a virtual view of real environment.

4. The virtual conversation method of claim 1, wherein the customary manner refers to real life intuitive experiences of participants corresponding to the participant image in usual locations in a real life environment.

5. The virtual conversation method of claim 1, wherein the step of broadcasting the conversation voice signal comprises enabling the electronic device to receive through a server the conversation voice signal sent from another electronic device of the participant and then broadcasting the conversation voice signal.

6. The virtual conversation method of claim 1, wherein the step of broadcasting the conversation voice signal comprises enabling the electronic device to directly receive the conversation voice signal sent from another electronic device of the participant and then broadcasting the conversation voice signal.

7. The virtual conversation method of claim 1, wherein the step of displaying the virtual environment view comprises displaying the virtual environment view in the electronic device.

8. The virtual conversation method of claim 1, wherein the step of broadcasting the conversation voice signal comprises broadcasting the conversation voice signal from the electronic device.

9. The virtual conversation method of claim 1, wherein the participant data comprises a name of the user of the electronic device, a personal identification number, or an identification data of the electronic device.

10. The virtual conversation method of claim 1, wherein the participant data comprises gender, physical height, skin tone, or hair style of the user of the electronic device.

11. The virtual conversation method of claim 1, wherein the participant data comprises a photo or image of the user of the electronic device.

12. The virtual conversation method of claim 1, wherein the step of displaying the virtual environment view further comprises displaying the participant image in an animated manner in accordance with the conversation voice signal.

13. The virtual conversation method of claim 1, wherein the virtual environment view comprises a three-dimensional continuous view, the virtual conversation method further comprises displaying different perspective views of the virtual environment view after the step of displaying the virtual environment view.

14. The virtual conversation method of claim 1, further comprising:
activating a private conversation module;
designating a private conversation recipient, wherein the private conversation recipient is another participant; and
transmitting a private conversation signal to the private conversation recipient.

15. The virtual conversation method of claim 14, wherein the step of designating comprises selecting a private conversation recipient image corresponding to the private conversation recipient.
